# EUROPÄISCHE PATENTSCHRIFT

(11) **EP 3 176 390 B1**
(45) Veröffentlichungstag und Bekanntmachung des Hinweises auf die Patenterteilung: **21.08.2019**
(21) Anmeldenummer: 16198458.8
(22) Anmeldetag: 11.11.2016
(51) Int. Cl.: F01L 1/047

(54) **VERSTELLBARE NOCKENWELLE**
ADJUSTABLE CAMSHAFT
ARBRE À CAMES RÉGLABLE

(30) Priorität: 02.12.2015 DE 102015224014
(43) Veröffentlichungstag der Anmeldung: 07.06.2017
(73) Patentinhaber: Mahle International GmbH, 70376 Stuttgart (DE)
(72) Erfinder: KREISIG, Michael, 70839 Gerlingen (DE); ROMMEL, Jürgen, 71576 Burgstetten (DE)
(74) Vertreter: BRP Renaud & Partner mbB Rechtsanwälte Patentanwälte Steuerberater

(56) Entgegenhaltungen:
- DE-A1-102014 116 774
- US-A1- 2007 144 469

## Beschreibung

Die vorliegende Erfindung betrifft eine verstellbare Nockenwelle mit einer Innenwelle und einer koaxial dazu angeordneten Außenwelle gemäß dem Oberbegriff des Anspruchs 1.

Verstellbare Nockenwellen sind bereits hinlänglich bekannt und werden in modernen Brennkraftmaschinen zur Beeinflussung von Ventilöffnungszeiten eingesetzt. Aus den DE 102014116774 A1 und US 2007/144469 A1 sind solche Nockenwellen bekannt.

Hierfür verwendet werden üblicherweise so genannte "Cam-in-Cam" Lösungen, bei welchen die Nockenwelle eine Außenwelle sowie eine koaxial dazu angeordnete und hierzu verstellbare, das heißt verdrehbare, Innenwelle besitzt. Die Lagerung derartiger Nockenwellen erfolgt dabei üblicherweise über einen Phasensteller, der bspw. mit seinem Stator mit der Außenwelle und mit seinem Rotor mit der Innenwelle verbunden ist. Der Stator des Phasenstellers wiederum ist gegenüber dem Rotor des Phasenstellers in Axialrichtung fixiert.

Die vorliegende Erfindung beschäftigt sich mit dem Problem, für eine Nockenwelle der gattungsgemäßen Art eine verbesserte oder zumindest eine alternative Ausführungsform anzugeben, die sich insbesondere durch eine veränderte Axiallagerung der Nockenwelle auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Axiallagerung einer verstellbaren Nockenwelle mit einer Innenwelle und einer Außenwelle erstmals nicht mehr allein über einen Rotor bzw. einen Stator eines Phasenstellers zu bewirken, sondern bereits die Innenwelle in Axialrichtung gegenüber der Außenwelle zu lagern, so dass die Axiallagerung der gesamten Nockenwelle bspw. alleine über die Innenwelle oder die Außenwelle möglich ist. Die erfindungsgemäße verstellbare Nockenwelle weist dabei in bekannter Weise eine Außenwelle sowie eine koaxial dazu angeordnete und verdrehbare Innenwelle auf, ebenso wie ein erstes Funktionselement, beispielsweise einen Nocken, ein Geberrad oder einen Lagerring, das über einen ersten Stift drehfest mit der Innenwelle verbunden ist, wobei dieser erste Stift durch ein sich in Umfangsrichtung erstreckendes erstes Langloch der Außenwelle geführt ist. Desweiteren umfasst die verstellbare Nockenwelle ein zweites Funktionselement, beispielsweise einen Nocken, ein Geberrad oder einen Lagerring, welches drehfest mit der Außenwelle verbunden ist, bspw. mittels eines thermischen Fügesitzes, mittels Kleben, mittels Schweißen, einem Presssitz oder Löten. Erfindungsgemäß sind nun drei erfindungsgemäße Alternativen denkbar, nämlich dass das erste Langloch derart auf den darin geführten ersten Stift abgestimmt, dass über den ersten Stift und das erste Langloch die Innenwelle in Axialrichtung bzgl. der Außenwelle fixiert ist. Alternativ hierzu kann auch ein zweites Langloch vorgesehen sein, welches derart auf einen zweiten darin geführten Stift abgestimmt ist, dass über den zweiten Stift und das zweite Langloch die Innenwelle in Axialrichtung bzgl. der Außenwelle fixiert ist. Wiederum alternativ vorgesehen sein kann, dass das erste Langloch und ein gegenüberliegendes drittes Langloch vorgesehen sind, die derart auf den darin geführten ersten Stift abgestimmt sind, dass über den ersten Stift und die beiden Langlöcher die Innenwelle in Axialrichtung bezüglich der Außenwelle fixiert ist. Bei der ersten und dritten Alternative erfolgt somit sowohl eine Axiallagerung der Innenwelle an der Außenwelle als auch eine Verdrehung des ersten Funktionselements relativ zur Außenwelle über den ersten Stift, während bei der zweiten Alternative die Verdrehung des ersten Funktionselements relativ zur Außenwelle über einen mit Spiel in einem ersten Langloch geführten ersten Stift bewirkt wird und die Axiallagerfunktion ausschließlich über den im zweiten Langloch geführten zweiten Stift erfolgt. Selbstverständlich ist dabei klar, dass die erfindungsgemäße Nockenwelle noch weitere erste und zweite Funktionselemente, beispielsweise Nocken, aufweisen kann, wobei die für die Verdrehung der weiteren ersten Funktionselemente erforderlichen weiteren Stifte ausschließlich dieser Funktion, nicht aber der Axialfixierung dienen. Mit der erfindungsgemäßen Nockenwelle erfolgt somit eine Axialfixierung der Innenwelle relativ zur Außenwelle erstmals über einen ersten oder zweiten Stift und damit in Abkehr des bisherigen Lagerprinzips der Innenwelle und der Außenwelle über den Stator bzw. Rotor eines Phasenstellers.

Bei einer vorteilhaften Weiterbildung der erfindungsgemäßen Lösung entsprechend der ersten Alternative entspricht eine lichte Breite des ersten Langlochs im Wesentlichen einem Außendurchmesser des darin geführten ersten Stifts, so dass der erste Stift beidseitig im ersten Langloch geführt und die Innenwelle in Axialrichtung bzgl. der Außenwelle fixiert ist. Der erste Stift ist somit spielfrei in einer entsprechenden Bohrung in der Innenwelle aufgenommen und ebenso vorzugsweise nahezu spielfrei im ersten Langloch geführt.

Bei einer weiteren vorteilhaften Ausführungsform der erfindungsgemäßen Lösung entsprechend der dritten Alternative quert dabei der erste Stift die Innenwelle vollständig und ist über das erste Langloch und das gegenüberliegende dritte Langloch in der Außenwelle mit dem ersten Funktionselement verbunden, wobei der erste Stift beidseitig spielfrei in beiden Langlöchern geführt ist. Im Vergleich zu der Nockenwelle gemäß dem vorhergehenden Absatz sind somit zwei gegenüberliegende für den ersten Stift vorgesehene Langlöcher vorgesehen, wobei beide die Axialfixierung der Innenwelle relativ zur Außenwelle übernehmen.

Rein theoretisch können dabei das erste und das dritte Langloch auch so breit ausgebildet sein, dass der erste Stift mit Spiel darin geführt ist, wobei in diesem Fall die beiden Langlöcher, das heißt das erste und das dritte Langloch in Axialrichtung zueinander versetzt angeordnet sind, so dass der erste Stift im ersten Langloch an der einen Seite und im gegenüberliegenden dritten Langloch an der anderen Seite und dadurch in jedem Langloch einseitig, insgesamt aber beidseitig geführt ist.

Bei einer weiteren vorteilhaften Ausführungsform der erfindungsgemäßen Lösung entsprechend der zweiten Alternative ist der zweite Stift beidseitig im zugehörigen zweiten Langloch geführt und greift nicht in einen Querschnitt der Innenwelle ein. Der zweite Stift und das zweite Langloch dienen somit nicht der Verstellung des ersten Funktionselements, sondern ausschließlich der Axialfixierung der Innenwelle relativ zur Außenwelle. Eine Verdrehung der Innenwelle relativ zur Außenwelle erfolgt in diesem Fall durch den ersten Stift, der in der Innenwelle angeordnet und über ein zugehöriges erstes Langloch mit dem ersten Funktionselement verbunden ist. Da die Führungs- und Axialfixierungsfunktion bereits vom zweiten Stift und zweiten Langloch bewirkt wird, kann der erste Stift mit Spiel im ersten Langloch angeordnet werden.

Zweckmäßig ist der erste Stift mit einem Spiel s von 0,03 mm < s < 0,08 mm, insbesondere mit einem Spiel s von ca. 0,05 mm im ersten oder dritten Langloch geführt, wobei alternativ der zweite Stift mit gleichem Spiel im zweiten Langloch geführt ist. Die genannten Größenangaben zeigen bereits, dass der erste Stift und der zweite Stift nahezu spielfrei im jeweils zugehörigen ersten, dritten oder zweiten Langloch geführt sind und dadurch die Axiallagerfunktion bewirken. Dient der erste Stift lediglich dem Verdrehen des ersten Nockens und wird die Axiallagerfunktion bzw. die Axialfixierungsfunktion über den zweiten Stift bewirkt, so kann der erste Stift auch mit einem deutlich größeren Spiel s, bspw. mit einem Spiel s von ca. 1,2 mm im ersten Langloch geführt sein. Gleiches gilt selbstverständlich auch für alle weiteren Stifte bei allen weiteren ersten Nocken.

Zweckmäßig ist ein Phasensteller für die Verdrehung der Innenwelle relativ zur Außenwelle vorgesehen, wobei das erste Funktionselement direkt benachbart zum Phasensteller angeordnet ist. Dies bietet den großen Vorteil, dass die Axiallagerfunktion wie bei konventionellen aus dem Stand der Technik bekannten Nockenwellen auch im Bereich bzw. in einem eng benachbarten Bereich zum Phasensteller erfolgt.

Zweckmäßig weist der Phasensteller einen Rotor und einen Stator auf, wobei der Stator axial fest mit der Außenwelle und der Rotor axialbeweglich mit der Innenwelle verbunden sind, oder wobei der Stator axialbeweglich mit der Außenwelle und der Rotor axial fest mit der Innenwelle verbunden ist, oder der Stator axial beweglich mit der Außenwelle und der Rotor axialbeweglich mit der Innenwelle verbunden ist. In den beiden ersten Alternativen ist es somit möglich, die gesamt Nockenwelle ausschließlich über die Innenwelle oder die Außenwelle in axialer Richtung zu lagern, da in diesem Fall entweder die Innenwelle mit dem Rotor oder die Außenwelle mit dem Stator des Phasenstellers in Axialrichtung fest verbunden ist. Rein theoretisch ist auch eine komplett schwimmende Lagerung der Nockenwelle denkbar, wobei in diesem Fall die Axiallagerfunktion der Innenwelle relativ zur Außenwelle ausschließlich über den ersten oder zweiten Stift erfolgt und die gesamte Nockenwelle in diesem Fall durch ein externes Axiallager zusätzlich nochmals gelagert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine erfindungsgemäße verstellbare Nockenwelle mit einem Phasensteller,
- Fig. 2 bis 4: jeweils eine Darstellung wie in Fig. 1, jedoch ohne Phasensteller und mit jeweils anders ausgestalteten ersten Nocken.

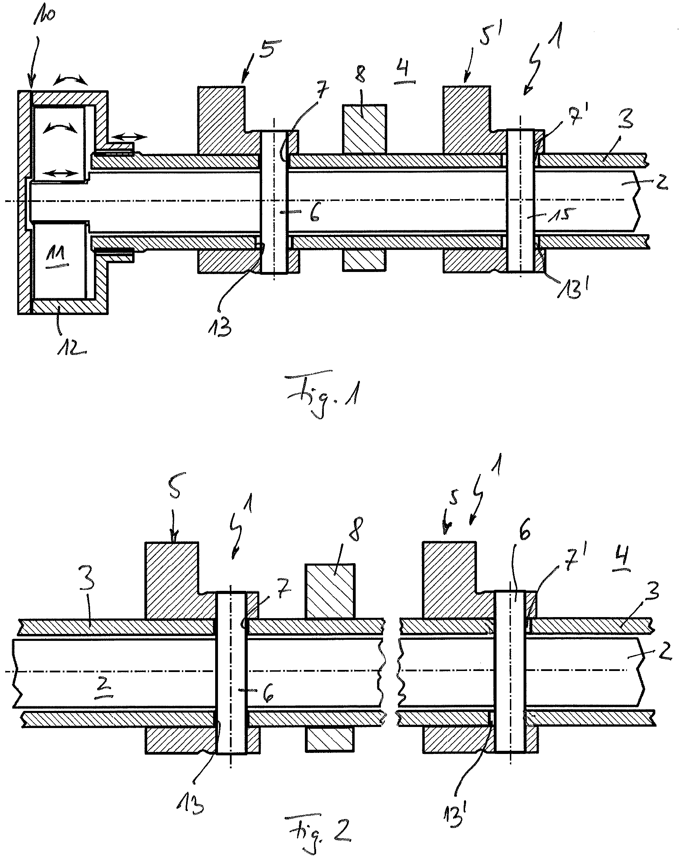

Entsprechend den Fig. 1 bis 4, weist eine erfindungsgemäße Nockenwelle 1 eine Außenwelle 3 sowie eine koaxial dazu angeordnete und zur Außenwelle 3 verdrehbare Innenwelle 2 auf. Eingesetzt wird eine derartige erfindungsgemäße Nockenwelle 1 bspw. in einer Brennkraftmaschine 4 eines Kraftfahrzeugs. Darüber hinaus besitzt die Nockenwelle 1 ein erstes Funktionselement 5, welches über einen ersten Stift 6 drehfest mit der Innenwelle 2 verbunden ist, wobei der erste Stift 6 durch ein sich in Umfangsrichtung erstreckendes erstes Langloch 7 der Außenwelle 3 geführt ist. Darüber hinaus vorgesehen ist ein zweites Funktionselement 8, das drehfest mit der Außenwelle 3 verbunden, bspw. thermisch mit dieser gefügt, verklebt, verschweißt, verschraubt oder verlötet. Das erste Funktionselement 5, das weitere erste Funktionselement 5' und/oder das das zweite Funktionselement 8 können dabei als Nocken, als Geberrad oder als Lagerring ausgebildet sein.

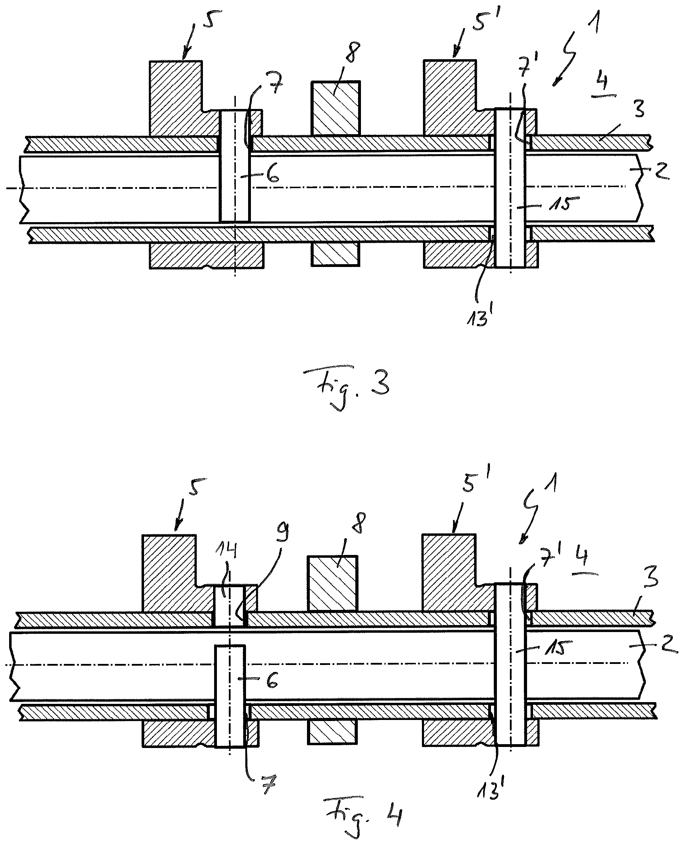

Erfindungsgemäß ist nun entweder vorgesehen, dass das erste Langloch 7 derart auf den darin geführten ersten Stift 6 abgestimmt ist, dass über den ersten Stift 6 und das erste Langloch 7 die Innenwelle 2 in Axialrichtung bzgl. der Außenwelle 3 gelagert und damit fixiert ist (vgl. die Fig. 1 und 3), oder dass ein zweites Langloch 9 vorgesehen ist, welches derart auf einen zweiten darin geführten Stift 14 abgestimmt ist, dass über diesen zweiten Stift 14 und das zweite Langloch 9 die Innenwelle 2 in Axialrichtung bzgl. der Außenwelle 3 gelagert und damit fixiert ist (vgl. Fig. 4). Wiederum alternativ vorgesehen sein kann auch, dass der erste Stift im ersten Langloch 7 und in einem gegenüberliegenden dritten Langloch 13 derart geführt ist, dass über den ersten Stift 6 und das erste und dritte Langloch 7, 13 die Innenwelle 2 in Axialrichtung bezüglich der Außenwelle 3 fixiert ist (vgl. Fig. 2).

Gemäß der Fig. 1 ist zusätzlich noch ein Phasensteller 10 mit einem Rotor 11 und einem Stator 12 zur Relativverdrehung der Innenwelle 2 relativ zur Außenwelle 3 eingezeichnet, wobei dieser Phasensteller 10 selbstverständlich auch bei den Nockenwellen 1 gemäß den Fig. 2-4 vorhanden ist, dort jedoch der Übersichtlichkeit halber nicht eingezeichnet wurde.

Gemäß der Erfindung wird somit die Axiallagerung der Innenwelle 2 relativ zur Außenwelle 3 nicht mehr über den Rotor 11 bzw. den Stator 12 des Phasenstellers 10 bewirkt, sondern entweder über den ersten Stift 6 oder zweiten Stift 14.

Betrachtet man die Darstellungen gemäß den Fig. 1-3, so kann man erkennen, dass eine lichte Breite des ersten Langlochs 7 im Wesentlichen einem Außendurchmesser des darin geführten ersten Stiftes 6 entspricht, so dass der erste Stift 6 beidseitig im ersten Langloch 7 geführt und dadurch die Innenwelle 2 in Axialrichtung bzgl. der Außenwelle 3 fixiert ist. Dabei kann der erste Stift 6 die Innenwelle 2 vollständig queren, wie dies bspw. gemäß den Fig. 1 und 2 dargestellt ist, oder aber nicht vollständig, wie dies bspw. gemäß der Fig. 3 dargestellt ist.

Betrachtet man die Ausführungsformen der erfindungsgemäßen Nockenwelle 1 gemäß den Fig. 1 und 2, so kann man erkennen, dass der erste Stift 6 über das erste Langloch 7 und ein gegenüberliegendes drittes Langloch 13 in der Außenwelle 3 mit dem ersten Funktionselement 5 verbunden ist, wobei der erste Stift 6 gemäß der Fig. 1 beidseitig ausschließlich im ersten Langloch 7 und gemäß der linken Darstellung in Fig. 2 beidseitig in beiden Langlöchern 7, 13 geführt ist. Bei der Darstellung gemäß der Fig. 1 ist das dritte Langloch 13 mit Spiel zum ersten Stift 6 ausgeführt, so dass die Axiallagerfunktion in diesem Fall ausschließlich über das erste Langloch 7 erfüllt wird, während in der linken und rechten Darstellung der Fig. 2 beide Langlöcher 7, 13 diese Funktion übernehmen.

Betrachtet man die rechte Darstellung in Fig. 2, so kann man hier eine weitere Variante der erfindungsgemäßen Nockenwelle 1 erkennen, bei welcher der erste Stift 6 die Innenwelle 2 vollständig quert und über das erste Langloch 7 und das gegenüberliegende dritte Langloch 13 in der Außenwelle 3 mit dem ersten Funktionselement 5 verbunden ist. Die beiden Langlöcher 7, 13 sind jedoch in diesem Fall nicht fluchtend zueinander angeordnet, wie dies bei der linken Darstellung gemäß der Fig. 2 oder in Fig. 1 gezeichnet ist, sondern in Axialrichtung zueinander versetzt, so dass der erste Stift 6 im ersten Langloch 7 an der einen Seite, hier an der linken Seite, und im gegenüberliegenden dritten Langloch 13 an der anderen Seite, hier an der rechten Seite, anliegt und geführt ist. In diesem Fall sind somit beide Langlöcher 7, 13 mit Spiel bzgl. des darin geführten ersten Stiftes 6 ausgebildet, jedoch in Axialrichtung derart zueinander versetzt angeordnet, dass durch Zusammenwirken der beiden Langlöcher 7, 13 und des dadurch geführten ersten Stiftes 6 trotzdem eine Axialfixierung der Innenwelle 2 relativ zur Außenwelle 3 erfolgen kann.

Betrachtet man die Ausführungsform der erfindungsgemäßen Nockenwelle 1 gemäß der Fig. 3, so kann man hier erkennen, dass der erste Stift 6 die Innenwelle 2 zwar vollständig quert, jedoch nicht komplett durchdringt und nur über das erste Langloch 7 in der Außenwelle 3 mit dem ersten Funktionselement 5 verbunden ist, wobei in diesem Fall die lichte Breite des ersten Langlochs 7 im Wesentlichen einen Außendurchmesser des darin geführten ersten Stiftes 6 entspricht, wodurch der erste Stift 6 beidseitig im ersten Langloch 7 geführt ist.

Ein Spiel s, mittels welchem der erste Stift 6 im ersten und/oder dritten Langloch 7, 13 oder der zweite Stift 14 im zweiten Langloch 9 geführt ist, kann dabei zwischen 0,03 mm und 0,08 mm, bevorzugt bei s ca. 0,05 mm liegen. Dies gilt jedoch ausschließlich dann, sofern das erste, zweite oder dritte Langloch 7, 9,13 zur Axialfixierung der Innenwelle 2 relativ zur Außenwelle 3 verwendet wird. Wird hingegen keine Axiallagerfunktion gefordert, so kann der erste Stift 6 bspw. auch im dritten Langloch 13 mit einem Spiel s von ca. 1,2 mm geführt sein (vgl. die Fig. 1 und 3). Dabei gilt selbstverständlich, dass das erste, die Axiallagerfunktion erfüllende Funktionselement 5 direkt benachbart zum Phasensteller 10 angeordnet ist, wobei auf der erfindungsgemäßen Nockenwelle 1 selbstverständlich auch weitere erste Funktionselemente 5' angeordnet sein können, welche mit einem dritten Stift 15 mit der Innenwelle 2 drehmomentübertragend verbunden sind. Der dritte Stift 15 dient dabei ausschließlich der Drehmomentübertragung und nicht etwa der Axiallagerfunktion, so dass in diesem Fall das erste Langloch 7' und das gegenüberliegende dritte Langloch 13' ein deutliches Spiel zum dritten Stift 15 aufweisen.

Der Phasensteller 10 weist dabei wie eingangs beschrieben einen Rotor 11 sowie einen Stator 12 auf, wobei der Stator 12 axial fest mit der Außenwelle 3 und der Rotor 11 axial beweglich mit der Innenwelle 2 verbunden sein kann. Alternativ hierzu ist auch denkbar, dass der Stator 12 axial beweglich mit der Außenwelle 3 und der Rotor 11 axial fest mit der Innenwelle 2 verbunden ist, oder dass der Stator 12 axial beweglich mit der Außenwelle 3 und der Rotor 11 axial beweglich mit der Innenwelle 2 verbunden ist und in diesem Fall die erfindungsgemäße Nockenwelle 1 an anderer Stelle axial gelagert wird. Rein theoretisch ist es aber denkbar, dass bspw. eine axiale Fixierung des Rotors 11 einerseits am Stator 12 und andererseits an der Innenwelle 2 erfolgt, wobei die Außenwelle 3 schwimmend zum Stator 12 des Phasenstellers 10 gelagert und lediglich über den ersten Stift 6 bzw. den zweiten Stift 14 axial fixiert wird. Ebenso denkbar ist auch die umgekehrte Variante, bei welcher die Außenwelle 3 in Axialrichtung fest mit dem Stator 12 des Phasenstellers 10 verbunden ist, die Innenwelle 2 jedoch schwimmend zum Rotor 11 des Phasenstellers 10 gelagert ist, so dass in diesem Fall die Axialfixierung der Innenwelle 2 über die Verstiftung mit der Außenwelle 3 erfolgt.

## Patentansprüche

1. Verstellbare Nockenwelle (1) mit
- einer Innenwelle (2) und einer koaxial dazu angeordneten Außenwelle (3),
- einem ersten Funktionselement (5), das über einen ersten Stift (6) drehfest mit der Innenwelle (2) verbunden ist, wobei der erste Stift (6) durch ein sich in Umfangsrichtung erstreckendes erstes Langloch (7) der Außenwelle (3) geführt ist,
- einem zweiten Funktionselement (8), das drehfest mit der Außenwelle (3) verbunden ist,
**dadurch gekennzeichnet,**
- **dass** ein zweites Langloch (9) vorgesehen ist, welches derart auf einen zweiten darin geführten Stift (14) abgestimmt ist, dass über den zweiten Stift (14) und das zweite Langloch (9) die Innenwelle (2) in Axialrichtung bezüglich der Außenwelle (3) fixiert ist, wobei der zweite Stift (14) beidseitig im zugehörigen zweiten Langloch (9) geführt ist und nicht in einen Querschnitt der Innenwelle (2) eingreift, oder
- **dass** das erste Langloch (7) und ein gegenüberliegendes drittes Langloch (13) vorgesehen sind, die derart auf den darin geführten ersten Stift (6) abgestimmt sind, dass über den ersten Stift (6) und das erste und dritte Langloch (7,13) die Innenwelle (2) in Axialrichtung bezüglich der Außenwelle (3) fixiert ist, wobei der erste Stift (6) die Innenwelle (2) vollständig quert und über das erste Langloch (7) und das gegenüberliegende dritte Langloch (13) in der Außenwelle (3) mit dem ersten Funktionselement (5) verbunden ist, wobei die beiden Langlöcher (7,13) in Axialrichtung zueinander versetzt angeordnet sind, so dass der erste Stift (6) im ersten Langloch (7) an der einen Seite und im gegenüberliegenden dritten Langloch (13) an der anderen Seite geführt ist.

2. Nockenwelle nach Anspruch 1,
**dadurch gekennzeichnet,**
- **dass** der erste Stift (6) mit einem Spiel s von 0,03 mm < s < 0,08, insbesondere mit einem Spiel s von ca. 0,05 mm im ersten oder dritten Langloch (7,13) geführt ist, oder
- **dass** der zweite Stift (14) mit einem Spiel s von 0,03 mm < s < 0,08, insbesondere mit einem Spiel s von ca. 0,05 mm im zweiten Langloch (9) geführt ist.

3. Nockenwelle nach einem der vorhergehenden Ansprüche,
**dadurch gekennzeichnet,**
**dass** zumindest ein weiteres erstes Funktionselement (5') mit einem dritten Stift (15) vorgesehen ist, der mit einem Spiel s von ca. 1,20 mm in einem ersten und/oder dritten Langloch (7',13') geführt ist.

4. Nockenwelle nach einem der vorhergehenden Ansprüche,
**dadurch gekennzeichnet,**
**dass** ein Phasensteller (10) vorgesehen ist, wobei das erste Funktionselement (5) direkt benachbart zum Phasensteller (10) angeordnet ist.

5. Nockenwelle nach Anspruch 4,
**dadurch gekennzeichnet,**
**dass** der Phasensteller (10) einen Rotor (11) und einen Stator (12) aufweist,
- wobei der Stator (12) axial fest mit der Außenwelle (3) und der Rotor (11) axial beweglich mit der Innenwelle (2) verbunden sind, oder
- wobei der Stator (12) axial beweglich mit der Außenwelle (3) und der Rotor (11) axial fest mit der Innenwelle (2) verbunden sind, oder
- wobei der Stator (12) axial beweglich mit der Außenwelle (3) und der Rotor (11) axial beweglich mit der Innenwelle (2) verbunden sind.

6. Nockenwelle nach einem der vorhergehenden Ansprüche,
**dadurch gekennzeichnet,**
- **dass** das erste Funktionselement (5) als Nocken, als Geberrad oder als Lagerring ausgebildet ist, und/oder
- **dass** das zweite Funktionselement (8) als Nocken, als Geberrad oder als Lagerring ausgebildet ist.

7. Brennkraftmaschine (4) mit einer Nockenwelle (1) nach einem der Ansprüche 1 bis 6.

## Claims

1. Adjustable camshaft (1) with
- an inner shaft (2) and an outer shaft (3) disposed coaxially thereto,
- a first functional element (5) which is connected via a first pin (6) in a non-rotational manner with the inner shaft (2), wherein the first pin (6) is guided by a first elongated hole (7), extending in circumferential direction, of the outer shaft (3),
- a second functional element (8), which is connected in a non-rotational manner with the outer shaft (3),
**characterised in**
- **that** a second elongated hole (9) is provided which is aligned to a second pin (14) guided therein, in such a manner that via the second pin (14) and the second elongated hole (9) the inner shaft (2) is fixed in axial direction with respect to the outer shaft (3), wherein the second pin (14) is guided on both sides in the associated second elongated hole (9) and does not engage in a cross-section of the inner shaft (2), or
- **that** the first elongated hole (7) and an oppositely-situated third elongated hole (13) are provided which are aligned to the first pin (6) guided therein, in such a manner that via the first pin (6) and the first and third elongated hole (7, 13) the inner shaft (2) is fixed in axial direction with respect to the outer shaft (3), wherein the first pin (6) completely traverses the inner shaft (2) and via the first elongated hole (7) and the oppositely-situated third elongated hole (13) in the outer shaft (3) is connected with the first functional element (5), wherein the two elongated holes (7, 13) are disposed in axial direction offset against one another, such that the first pin (6) is guided in the first elongated hole (7) on the one side and in the oppositely-situated third elongated hole (13) on the other side.

2. Camshaft according to claim 1,
**characterised in**
- **that** the first pin (6) is guided with a play s of 0.03 mm < s < 0.08, in particular with a play s of approximately 0.05 mm in the first or third elongated hole (7, 13), or
- **that** the second pin (14) is guided with a play s of 0.03 mm < s < 0.08, in particular with a play s of approximately 0.05 mm in the second elongated hole (9).

3. Camshaft according to any of the preceding claims,
**characterised in**
**that** at least one further first functional element (5') with a third pin (15) is provided, which is guided with a play s of approximately 1.20 mm in a first and/or third elongated hole (7', 13').

4. Camshaft according to any of the preceding claims,
**characterised in**
**that** a phase shifter (10) is provided, wherein the first functional element (5) is disposed directly adjacent to the phase shifter (10).

5. Camshaft according to claim 4,
**characterised in**
**that** the phase shifter (10) has a rotor (11) and a stator (12),
- wherein the stator (12) is axially securely connected with the outer shaft (3) and the rotor (11) is axially movably connected with the inner shaft (2), or
- wherein the stator (12) is axially movably connected with the outer shaft (3) and the rotor (11) is axially securely connected with the inner shaft (2), or
- wherein the stator (12) is axially movably connected with the outer shaft (3) and the rotor (11) is axially movably connected with the inner shaft (2).

6. Camshaft according to any of the preceding claims,
**characterised in**
- **that** the first functional element (5) is in the form of a cam, a transmitter wheel or a bearing ring, and/or
- **that** the second functional element (8) is in the form of a cam, a transmitter wheel or a bearing ring.

7. Internal combustion engine (4) with a camshaft (1) according to any of claims 1 to 6.

## Revendications

1. Arbre à cames réglable (1), avec
- un arbre intérieur (2) et un arbre extérieur (3) agencé de manière coaxiale par rapport à celui-ci,
- un premier élément fonctionnel (5) qui est relié de manière solidaire en rotation à l'arbre intérieur (2) par l'intermédiaire d'une première goupille (6), dans lequel la première goupille (6) est guidée par un premier trou oblong (7), s'étendant dans la direction périphérique, de l'arbre extérieur (3),
- un second élément fonctionnel (8) qui est relié de manière solidaire en rotation à l'arbre extérieur (3),
**caractérisé en ce que**
- un deuxième trou oblong (9) est prévu, qui est adapté de telle manière à une deuxième goupille (14) guidée à l'intérieur de celui-ci, que l'arbre intérieur (2) est immobilisé dans la direction axiale par rapport à l'arbre extérieur (3) par l'intermédiaire de la deuxième goupille (14) et du deuxième trou oblong (9), dans lequel la deuxième goupille (14) est guidée des deux côtés dans le deuxième trou oblong (9) qui lui est associé et ne s'engage pas dans une section transversale de l'arbre intérieur (2), ou
- le premier trou oblong (7) et un troisième trou oblong (13) opposé sont prévus, qui sont adaptés de telle manière à la première goupille (6) guidée à l'intérieur de ceux-ci, que l'arbre intérieur (2) est immobilisé dans la direction axiale par rapport à l'arbre extérieur (3) par l'intermédiaire de la première goupille (6) et des premier et troisième trous oblongs (7, 13), dans lequel la première goupille (6) est reliée au sein de l'arbre extérieur (3) au premier élément fonctionnel (5) de manière complètement transversale par rapport à l'arbre intérieur (2) par l'intermédiaire du premier trou oblong (7) et du troisième trou oblong (13) opposé, dans lequel les deux trous oblongs (7, 13) sont agencés de manière décalée l'un par rapport à l'autre dans la direction axiale, de sorte que la première goupille (6) est guidée dans le premier trou oblong (7) au niveau d'un des côtés et est guidée dans le troisième trou oblong (13) opposé au niveau de l'autre côté.

2. Arbre à cames selon la revendication 1,
**caractérisé en ce que**
- la première goupille (6) est guidée dans le premier ou le troisième trou oblong (7, 13) avec un jeu s correspondant à 0,03 mm < s < 0,08, en particulier avec un jeu s d'environ 0,05 mm, ou
- la deuxième goupille (14) est guidée dans le deuxième trou oblong (9) avec un jeu s correspondant à 0,03 mm < s < 0,08, en particulier avec un jeu s d'environ 0,05 mm.

3. Arbre à cames selon l'une quelconque des revendications précédentes,
**caractérisé en ce que**
au moins un autre premier élément fonctionnel (5') est muni d'une troisième goupille (15) qui est guidée dans un premier et/ou un troisième trou oblong (7', 13') avec un jeu s d'environ 1,20 mm

4. Arbre à cames selon l'une quelconque des revendications précédentes,
**caractérisé en ce que**
un dispositif de réglage de phase (10) est prévu, dans lequel le premier élément fonctionnel (5) est agencé au voisinage immédiat du dispositif de réglage de phase (10).

5. Arbre à cames selon la revendication 4,
**caractérisé en ce que**
le dispositif de réglage de phase (10) présente un rotor (11) et un stator (12),
- dans lequel le stator (12) est relié de manière axialement solidaire à l'arbre extérieur (3) et le rotor (11) est relié de manière axialement mobile à l'arbre intérieur (2), ou
- dans lequel le stator (12) est relié de manière axialement mobile à l'arbre extérieur (3) et le rotor (11) est relié de manière axialement solidaire à l'arbre intérieur (2), ou
- dans lequel le stator (12) est relié de manière axialement mobile à l'arbre extérieur (3) et le rotor (11) est relié de manière axialement mobile à l'arbre intérieur (2).

6. Arbre à cames selon l'une quelconque des revendications précédentes,
**caractérisé en ce que**
- le premier élément fonctionnel (5) est réalisé sous forme de came, de roue de capteur ou de bague de roulement, et/ou
- le second élément fonctionnel (8) est réalisé sous forme de came, de roue de capteur ou de bague de roulement.

7. Moteur à combustion interne (4) comprenant un arbre à cames (1) selon l'une quelconque des revendications 1 à 6.
